Europäisches Patentamt

European Patent Office

Office européen des brevets

(19)

(11) Veröffentlichungsnummer: **0 121 947**
**B1**

(12) **EUROPÄISCHE PATENTSCHRIFT**

(45) Veröffentlichungstag der Patentschrift:
30.08.89

(21) Anmeldenummer: 84104161.9

(22) Anmeldetag: 12.04.84

(51) Int. Cl.⁴: **B 60 R 13/08**, G 10 K 11/16,
B 32 B 5/18, F 16 F 1/36

(54) Schichtkörper mit flexiblen Teilbereichen zur Reduzierung von Körper- und/oder Luftschall bei akustisch angeregten Flächen.

(30) Priorität: 12.04.83 DE 3313044

(43) Veröffentlichungstag der Anmeldung:
17.10.84 Patentblatt 84/42

(45) Bekanntmachung des Hinweises auf die Patenterteilung: 30.08.89 Patentblatt 89/35

(84) Benannte Vertragsstaaten:
BE FR GB IT SE

(56) Entgegenhaltungen:
EP--A-- 0 079 253
DE--A-- 2 806 726
FR--A-- 2 186 449
GB--A-- 2 056 360
US--A-- 4 066 058

(73) Patentinhaber: Pelzer, Helmut
Neue Strasse 5
D-5804 Herdecke-Ende (DE)

(72) Erfinder: Pelzer, Helmut
Neue Strasse 5
D-5804 Herdecke-Ende (DE)

(74) Vertreter: Recktenwald, Albert, Dipl.-Ing.
Oberdorf 32 Postf. 125
D-5378 Blankenheim-Reetz (DE)

EP 0 121 947 B1

Jouve, 18, rue St-Denis, 75001 Paris, France

## Beschreibung

Die Erfindung betrifft einen Schichtkörper mit flexiblen Teilbereichen zur Reduzierung von Körper- und/oder Luftschall bei akustisch angeregten Flächen.

Die technische Forderung, durch Gewichtsersparnis zur Minderung des Energieverbrauchs bei bewegten Systemen beizutragen, führt auf dem Gebiet der Schalldämmung und -dämpfung zu Anforderungen an die überwiegend benutzten Mehrschichtsysteme, welche sich nach dem bisherigen Kenntnisstand physikalisch widersprechen.

Bekannte Problemlösungen zur Schalldämmung im Kraftfahrzeugbau enthalten meistens biegeweiche Schwerschichten im Wechsel mit leichten Absorberschichten. Die bekannten Schwerschichten bestehen z. B. aus Bindemitteln wie thermoplastischen Kunststoffen, welche mit mineralischen Füllstoffen zur Verbesserung der Wirksamkeit angereichert sind. Diese Konzeption hat hohe Flächengewichte zur Folge, welche den heutigen technischen Forderungen widersprechen.

Ein anderes bekanntes Verfahren zur Herstellung eines mehrschichtigen Belages (DE-B-12 01 083) beschreibt ein System bestehend aus mindestens einem Abdeckblech und einer Zwischenschicht aus dämpfenden, viskoelastischen Stoffen, insbesondere weichgemachten Kunststoffen. Hierbei muß das Blech zuerst der räumlichen Form des zu entdröhnenden Bauteils angepaßt werden, so daß die Zwischenschicht mit dem Abdeckblech verbunden werden kann und beide dem zu dämpfenden Bauteil zuzuordnen sind.

Die Benutzung dieses Feder-Masse-Systems bringt zwar akustisch ausreichende Wirkungen, jedoch ist das Fertigungsverfahren aufwendig, Anpassungsmöglichkeiten an fertigungsbedingte Maßveränderungen an der zu dämpfenden Fläche sind schwierig bis unmöglich, wobei zusätzlich ein sehr hohes Flächengewicht zu berücksichtigen sein wird.

Aus der DE-A-20 06 741 ist ein mehrschichtiges, schalldämmendes Bauteil für Kraftfahrzeuge bekannt, welches aus der Schichtfolge Oberschicht, Zwischenschicht (z. B. thermoplastischer Schwerschicht) und Unterschicht (z. B. Schaumstoff) aufgebaut ist. Diese drei Schichten sind entweder — lose übereinandergelegt — als Bodengruppe vorgesehen oder als Verbundschicht auf der Unterschicht gelagert. Diese Konzeption bringt bei der Montage zusätzliche Komplikationen, wobei die aufwendige Mehrfachlagerhaltung zusätzlich erschwerend ins Gewicht fällt. Darüberhinaus ist auch an den Stellen der akustisch angeregten Bodenplatte, welche nur geringen Störschallanteil besitzt, das gleiche Flächengewicht und die gleiche akustische Dämpfungswirkung wie an den Extremstellen der Störschallanregung.

Der Erfindung liegt die Aufgabe zugrunde eine schalldämmende und -dämpfende Verkleidung für akustisch angeregte Flächen mit unterschiedlicher Verteilung der Störschallintensität zu schaffen, welche gegenüber den beschriebenen bekannten Problemlösungen des Standes der Technik ohne Verlust an akustischer Dämmwirkung weiteres Gewicht und weiteren Raum einspart. Durch Einsparung von Arbeitsgängen bei Fertigung und Montage soll der Kostenaufwand minimiert und eine Zusatzlagerhaltung für Bestandteile des Schichtkörpers vermieden werden.

Diese Aufgabe wird erfindungsgemäß gelöst durch einen Schichtkörper der eingangs beschriebenen Art mit den Merkmalen :

Ein einfaches Feder-Masse-System besteht aus einer Schwerschicht und einer mit ihr verbundenen Schicht eines Kunststoffschaums ; das Feder-Masse-System ist in den Bereichen extremen Störschalls der akustisch angeregten Fläche durch ein Zusatzelement ergänzt ; das harte Zusatzelement ist federnd aufgehängt und integraler Bestandteil der Schaumstoffschicht ; die federnde Aufhängung des Zusatzelementes an der Schaumstoffschicht bildet eine gedämpfte Feder ; das harte flächige Zusatzelement wird in einem definierten Abstand von der akustisch angeregten Fläche gehalten, so daß von der Fläche und dem harten Zusatzelement eine akustische Doppelwand gebildet wird ; das harte Zusatzelement liegt in seinen Randbereichen über eine dünne, den Hohlraum zwischen dem Zusatzelement und der angeregten Fläche abdichtende Schaumstoffschicht an der Fläche an.

Durch die EP-A-0 079 253 (Veröffentlicht am 18.05.1983 und als Stand der Technik gemäß Artikel 54 (3) EPÜ geltend), die zwar rangälter, jedoch nicht vorpubliziert und daher nur für die Frage der Neuheit von Bedeutung ist, wird ein Schichtkörper mit flexiblen Teilbereichen zur Reduzierung von Körper- und/oder Luftschall bei akustisch angeregten Flächen beschrieben. Ein Feder-Masse-System, bestehend aus einer Schwerschicht verbunden mit Kunststoffschaum, wird in den Bereichen extremen Störschalls durch ein hartes, federnd aufgehängtes Zusatzelement ergänzt, das mit der Schaumstoffschicht fest verbunden ist. Seine federnde Aufhängung durch die Schaumstoffschicht wirkt als gedämpfte Feder ; sie wird in einem definierten Abstand von der akustisch angeregten Fläche gehalten, so daß eine akustische Doppelwand gebildet wird.

Die Erfindung geht darüber hinaus. Bei ihr liegt das harte Zusatzelement in seinen Randbereichen über eine dünne, den Hohlraum zwischen dem Zusatzelement und der angeregten Fläche abdichtende Schaumstoffschicht an der Fläche an, wodurch die akustische Wirksamkeit des Schichtkörpers erheblich verbessert wird.

Bei dem erfindungsgemäßen Schichtkörper hat es sich als vorteilhaft erwiesen, die Schaumstoffschicht aus PUR-Schaum mit ca. 90 kg/m³ zu fertigen. Hierbei kann während des Schäumvorganges das Zusatzelement integriert werden, sodaß ein zusätzlicher Verklebungsvorgang entfällt.

Das harte Zusatzelement dient zur akustischen Abschottung der Bereiche hohen Störschalls. Hierbei wird zur Vergrößerung der Dämmwirkung gleichzeitig eine partielle Erhöhung des Gesamtflächengewichtes nur in den kritischen Bereichen realisiert.

Einen weiteren Vorteil bietet die Schrägstellung des Zusatzelementes zur angeregten Fläche hin, welche die Funktion dieses Bauteils als Fußstütze sicherstellt. Die Anhäufung akustisch toten Materials wird vermieden. Zusätzliche Bauteile, welche getrennte Lagerhaltung erfordern, sind nicht vorhanden.

Die erfindungsgemäß vorteilhafte Ausführungsform der Schwerschicht ist nach folgenderRezeptur hergestellt :

- 100 T. EPDM
- 600 T. Titanoxyd
- 30 T. paraffinisches Öl
- 1 T. 2,2,4-Trimethyl-1,2-Dihydro-6-Dodecylchinolin
- 0,5 T. 3,4-Dimethyl-3,4-Diphenyl-exan
- 0,5 T. Perfluorkarbonsäure

Eine wesentliche Verbesserung der akustischen Dämmwirkung des erfindungsgemäßen Schichtkörpers wird durch die federnde Aufhängung des harten Zusatzelementes erreicht, wobei ein zweites Feder-Masse-System gebildet wird ; durch die Benutzung der Feder des ersten Feder-Masse-Systems kann so eine zusätzliche Schicht eingespart werden.

Eine weitere Verbesserung der Dämpfungs- und Dämmwirkung wird durch den Aufbau des Zusatzelementes aus zwei harten äußeren Schalen und einer plastoelastischen Zwischenschicht erreicht.

Ein Ausführungsbeispiel der Erfindung ist in der Zeichnung dargestellt und wird im Folgenden beschrieben. Es zeigen :

Fig. 1 Schnitt durch den Schichtkörper mit einfachem Zusatzelement ;

Fig. 2 Schnitt durch den Schichtkörper mit akustisch angeregter Fläche und vergrößerter Ausführung des zweiflächigen Zusatzelementes.

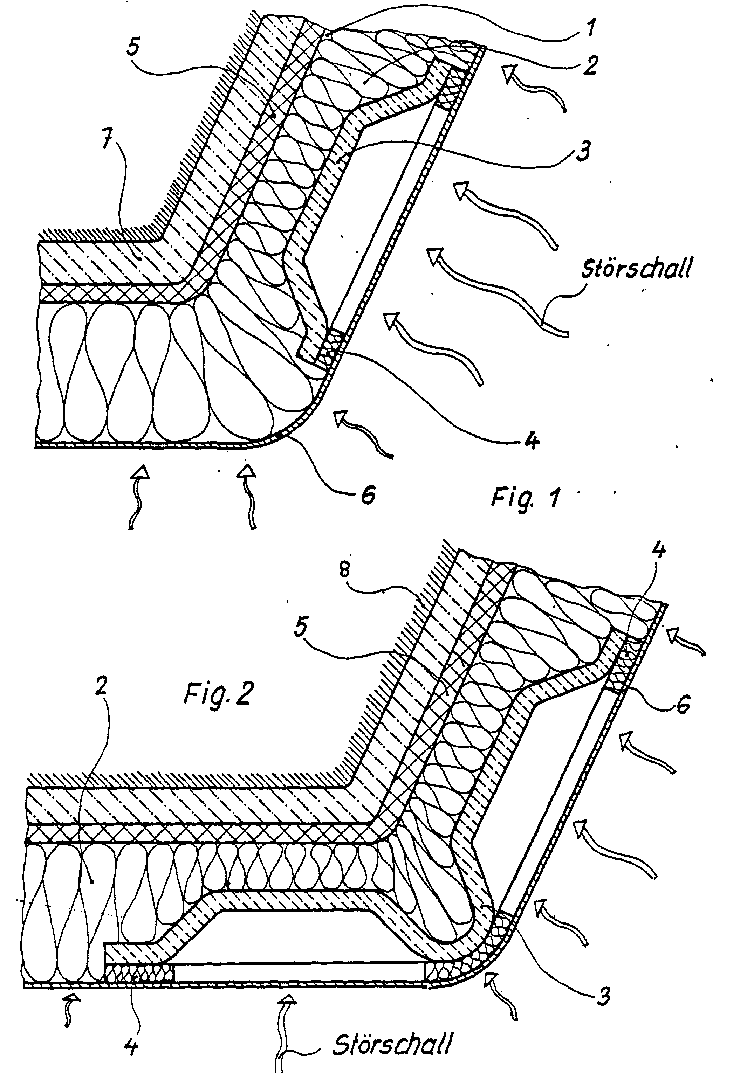

Wie in Fig. 1 dargestellt, wird die akustisch angeregte Fläche 6 von Störschallfeldern mit unterschiedlicher Intensität angeregt. Zur Abschottung des Bereiches der höchsten Intensität liegt das harte Zusatzelement 3 auf der Fläche 6 auf und liegt dabei in den Randbereichen 4 über eine dünne Schaumstoffschicht an der Fläche 6, sodaß der Hohlraum zwischen dem harten Zusatzelement 3 und der angeregten Fläche 6 abgedichtet ist.

Das harte Zusatzelement 3 ist durch die Schaumstoffschicht 2 ein integraler Bestandteil des Schichtkörpers, welcher durch die gleichfalls während des Fertigungsvorganges mit der Schaumstoffschicht verbundene Schwerschicht 5 abgeschlossen ist. Auf der Schwerschicht 5 können zur weiteren Konfektionierung dienende Flächenbeläge 7, 8 wie Bodenteppiche, Folien usw. vorgesehen sein.

Fig. 2 zeigt zusätzliche Bereiche hoher Störschallintensität. Dieses Problem wird durch ein zweiflächiges Zusatzelement 3 gelöst. Auch bei dieser Version liegen die Randbereiche 4 des Zusatzelementes 3 über eine dünne Schaumstoffschicht an der akustisch angeregten Fläche 6 an, sodaß der Hohlraum zwischen Zusatzelement 3 und der angeregten Fläche 6 sicher abgedichtet wird. Die Schaumstoffschicht 2 integriert das harte Zusatzelement in den Schichtkörper 1 und bindet gleichzeitig die Schwerschicht 5 durch die während des Aushärtungsvorganges auftretenden werkstoffspezifischen Klebekräfte.

## Patentansprüche

1. Schichtkörper mit flexiblen Teilbereichen zur Reduzierung von Körper- und/oder Luftschall bei akustisch angeregten Flächen (6) mit den Merkmalen :

Ein einfaches Feder-Masse-System besteht aus einer Schwerschicht (5) und einer mit ihr verbundenen Schicht (2) eines Kunststoffschaums ;

das Feder-Masse-System ist in den Bereichen extremen Störschalls der akustisch angeregten Fläche (6) durch ein Zusatzelement (3) ergänzt ;

das harte Zusatzelement (3) ist federnd aufgehängt und integraler Bestandteil der Schaumstoffschicht (2) ;

das an der Schaumstoffschicht (2) federnd aufgehängte Zusatzelement (3) bildet mit dieser eine gedämpfte Feder ;

das harte flächige Zusatzelement (3) wird in einem definierten Abstand von der akustisch angeregten Fläche (6) gehalten, so daß von der Fläche (6) und dem harten Zusatzelement (3) eine akusatische Doppelwand gebildet wird ;

das harte Zusatzelement (3) liegt in seinen Randbereichen (4) über eine dünne, den Hohlraum zwischen dem Zusatzelement (3) und der angeregten Fläche (6) abdichtende Schaumstoffschicht an der Fläche (6) an.

2. Schichtkörper nach Anspruch 1, dadurch gekennzeichnet, daß für die Schaumstoffschicht (2) PUR-Schaum mit vorzugsweise 90 kg/m³ verwandt wird.

3. Schichtkörper nach Anspruch 1 oder 2, dadurch gekennzeichnet, daß das Zusatzelement (3) zur festen Verklebung mit der Schwerschicht (5) während des Schäumvorganges zumindest mit der dieser (5) zugewandten Seite eingeschäumt wird.

4. Schichtkörper nach einem der vorhergehenden Ansprüche, dadurch gekennzeichnet, daß in den Bereichen geringer Störschallabgabe der angeregten Fläche (6) die Schaumstoffschicht unmittelbar an der Fläche (6) anliegt.

5. Schichtkörper nach einem der vorhergehenden Ansprüche, dadurch gekennzeichnet, daß das Zusatzelement (3) aus zwei harten äußeren Schalen und einer plastoelastischen Zwischenschicht gebildet ist.

6. Schichtkörper nach einem der vorhergehenden Ansprüche, dadurch gekennzeichnet, daß das harte Zusatzelement (3) durch Schrägstellung im spitzen Winkel zur angeregten Fläche (6) zugleich als Fußstütze dient.

7. Schichtkörper nach einem der vorhergehenden Ansprüche, dadurch gekennzeichnet, daß die Schwerschicht (5) nach der Rezeptur

100 T. EPDM,
600 T. Titanoxid,
30 T. paraffinisches Öl,
1 T. 2,2,4-Trimethyl-1,2-Dihydro-6-Dodecylochinolin,
0,5 T. 3,4-Dimethyl-3,4-Diphenylhexan,
0,5 T. Perfluorkarbonsäure hergestellt ist.


## Claims

1. Sandwich construction with flexible subsections to reduce structure-borne noise and/or airborne noise from acoustically exited surfaces characterized by :
a simple spring/mass system consisting of a heavy layer (5) attached to a synthetic foam layer (2) ;
in the areas of the acoustically exited surface (6) emitting an extreme noise level a supplementary element (3) is added to the spring/mass system ;
the supplementary element (3) is suspended resiliently, being an integral part of the foam layer (2) ;
the supplementary element (3) suspended resiliently to the foam layer (2) forms a damped spring together with the foam layer (2) ;
the hard plane shaped supplementary element (3) is kept at a defined distance from the acoustically exited surface (6) both the surface (6) and the hard plane shaped supplementary element (3) forming an acoustic double wall ;
the hard plane shaped supplementary element (3) over an intermediate thin foam layer abuts on the surface (6) to seal the cavity between the supplementary element (3) and the exited surface (6).

2. Sandwich construction according to claim 1, characterized by the use of PUR foam of preferably 90 kg/m³ for the foam layer (2).

3. Sandwich construction according to claim 1 or 2, characterized by during the foam expanding process foaming at least the surface of the supplementary element (3) facing the heavy layer (5) to assure propper bonding between the supplementary element (3) and the heavy layer (5).

4. Sandwich element according to one of the preceding claims, characterized by direct contact between the foam layer (2) and the exited surface (6) in areas of low noise emission.

5. Sandwich element according to one of the preceding claims, characterized by the supplementary element (3) being made of two outer shells and a plasto-elastic inner layer.

6. Sandwich element according to one of the preceding claims, characterized by positioning the hard supplementary element (3) at an acute angle to the exited surface (6) to also use the supplementary element (3) as foot-rest.

7. Sandwich element according to one of the preceding claims, characterized by manufacturing the heavy layer (5) according to the formula

100 parts by weight EPDM,
600 parts by weight titanium oxide,
30 parts by weight paraffinic substance oil,
1 part by weight 2,2,4-trimethyl-1,2-dihydro-6-dodecyl chinol,
0,5 parts by weight 3,4-dimethyl-3,4-diphenylhexane,
0,5 parts by weight perfluorocarbonic acid.


## Revendications

1. Objet stratifié à sections flexibles pour la réduction des bruits d'impact et/ou des bruits aériens pour surfaces de stimulation acoustique (6), l'objet stratifié présentant les caractéristiques suivantes :

# EP 0 121 947 B1

Un système simple ressort/masse élastique consiste en une couche lourde (5) juxtaposée à une couche (2) de mousse plastique ;

Le système ressort/masse élastique est muni d'un élément supplémentaire (3) dans les zones de la surface de stimulation acoustique (6) exposées aux bruits perturbateurs extrêmes ;

L'élément dur supplémentaire (3) est suspendu élastiquement et fait partie intégrante de la couche de mousse plastique (2) ;

L'élément supplémentaire (3) étant suspendu élastiquement sur la couche de mousse plastique (2) forme avec celle-ci un corps élastique amorti ;

L'élément dur supplémentaire (3) est séparé de la surface de stimulation acoustique (6) par une distance définie de manière qu'une double paroi acoustique soit constituée par la surface (6) et l'élément dur supplémentaire (3) ;

L'élément dur supplémentaire (3) repose, par ses zones marginales (4), sur la surface (6) à l'aide d'une couche de mousse mince assurant l'étanchéité de l'espace vide entre l'élément supplémentaire (3) et la surface stimulée (6).

2. Objet stratifié selon revendication 1, caractérisé en ce que la couche de mousse plastique (2) soit une mousse polyuréthane (PUR), de préférence de 90 kg/m³.

3. Objet stratifié selon revendication 1 ou 2, caractérisé en ce que l'élément supplémentaire (3), pour obtenir un collage fort avec la couche dur (5), soit moussé au moins sur son côté faisant face à cette couche (5).

4. Objet stratifié selon une quelconque des revendications précédentes, caractérisé en ce que la couche de mousse (2) soit directement juxtaposée à la surface (6) dans les zones exposées à des bruits perturbateurs faibles.

5. Objet stratifié selon une quelconque des revendications précédentes, caractérisé en ce que l'élément supplémentaire (3) soit constitué par deux coques extérieures dures et une couche intermédiaire élastoplastique.

6. Objet stratifié selon une quelconque des revendications précédentes, caractérisé en ce que l'élément supplémentaire (3) sert également de support par son inclinaison acutangulée par rapport à la surface stimulée (6).

7. Objet stratifié selon une quelconque des revendications précédentes, caractérisé en ce que la couche dure (5) soit fabriquée d'après la formule suivante :

100 p. EPDM (monomère diénique d'éthylène-propylène)
600 p. oxyde de titane,
30 p. huile paraffinique,
1 p. 2,2,4-triméthyle-1,2-dihydro-6-dodécylquinoléine,
0,5 p. 3,4-diméthyle-3,4-diphénylhexane,
0,5 p. acide carboxylique perfluoré.

5

Störschall

Fig. 1

Fig. 2

Störschall